# EUROPÄISCHE PATENTSCHRIFT

(11) **EP 3 424 645 B1**
(45) Veröffentlichungstag und Bekanntmachung des Hinweises auf die Patenterteilung: **05.05.2021**
(21) Anmeldenummer: 17180322.4
(22) Anmeldetag: 07.07.2017
(51) Int. Cl.: B25B 27/10, B25F 3/00, B25F 5/00, B25B 27/14, H01R 43/042

(54) **KUPPLUNG ZUR VERBINDUNG EINES WERKZEUGWECHSELKOPFES MIT EINEM MASCHINENTEIL EINES PRESSGERÄTS**
COUPLING FOR THE CONNECTION OF A SWAPPABLE TOOL HEAD WITH A MACHINE PART OF A PRESS DEVICE
ACCOUPLEMENT DESTINÉ À RELIER UNE TÊTE DE CHANGEMENT D'OUTIL À UNE PARTIE D'UN APPAREIL DE PRESSE

(43) Veröffentlichungstag der Anmeldung: 09.01.2019
(73) Patentinhaber: Von Arx AG, 4450 Sissach (CH)
(72) Erfinder: Kreuzer, Rudolf, 5033 Buchs (CH)
(74) Vertreter: Keller Schneider Patent- und Markenanwälte AG (Zürich)

(56) Entgegenhaltungen:
- DE-A1-102016 202 831
- US-A1- 2005 218 758
- US-A1- 2013 264 085

## Beschreibung

### Technisches Gebiet

Die vorliegende Erfindung betrifft eine Kupplung zur Verbindung eines Werkzeugwechselkopfes mit einem Maschinenteil eines Pressgeräts gemäss Oberbegriff des ersten Patentanspruches, ein Pressgerät mit der erfindungsgemässen Kupplung sowie ein Verfahren zur Betätigung der erfindungsgemässen Kupplung zur Verbindung eines Werkzeugwechselkopfes mit einem Maschinenteil eines Pressgeräts.

### Stand der Technik

Pressgeräte werden zu verschiedenen Zwecken eingesetzt, so auch beispielsweise zum Verpressen von Kabelschuhen auf Elektrokabel, aber auch zum Schneiden von Kabeln oder zum Stanzen von Löchern in Blechkonstruktionen. Um diese verschiedenen Anwendungen in einer Maschine zu realisieren, ist ein Wechselsystem des mit einem jeweiligen Werkzeug versehenen Kopfes erforderlich. Die verschiedenen aufsetzbaren Köpfe werden vereinfacht im Folgenden als Wechselköpfe bezeichnet. Mit dem gleichen Pressgerät und mit verschiedenen Wechselköpfen kann man bei Bedarf schnell und leicht auf andere Anwendungen umstellen.

Ein besonderes Problem bei Pressgeräten mit Wechselköpfen sind jedoch die zu übertragenden Längskräfte, d.h. die von den Pressgeräten erzeugten Druckkräfte beziehungsweise Pressdrücke, welchen der Kupplungsmechanismus standhalten muss. Übliche Längskräfte bewegen sich hierbei im Bereich von beispielsweise 24 kN bis 130 kN.

Es geht folglich darum, einen Kupplungsmechanismus zu finden, der einfach und schnell handhabbar ist und dennoch Betriebssicherheit auch bei sehr hohen Längskräften bietet.

Aus dem Dokument US 2013/0264085 A1 ist beispielsweise eine Kupplung zur Verbindung eines Werkzeugwechselkopfes mit einem Maschinenteil eines Pressgeräts bekannt, bei welchem folglich ebenfalls hohe Längskräfte auf den Kupplungsmechanismus wirken.

Im Weiteren offenbart US 2013/0264085 A1 am maschinenseitigen Teil eines Pressgeräts einen zylinderförmigen Schaftteil, wobei der Schaftteil in einem korrespondierenden Aufnahmebereich eines Werkzeugwechselkopfes aufgenommen werden kann und darin axial verschieblich ist. Im Aufnahmebereich des Werkzeugwechselkopfs sowie auf der Mantelfläche des Schaftteils ist jeweils eine Vielzahl von Verriegelungsnasen angeordnet. Durch Drehung des Werkzeugwechselkopfes können die Verriegelungsnasen im Aufnahmebereich mit den Verriegelungsnasen am Schaftteil in Deckung gebracht und dadurch eine Schliessstellung erzielt werden. In der Schliessstellung kann verhindert werden, dass der Werkzeugwechselkopf vom Maschinenteil getrennt wird. Durch Drehung des Werkzeugwechselkopfes kann in mindestens einer Winkelstellung eine Offenstellung erreicht werden, in welcher der Werkzeugwechselkopf vom Maschinenteil getrennt werden kann. Mit anderen Worten ist zwischen Werkzeugwechselkopf und Maschinenteil ein Bajonettverschluss ausgebildet.

Bei der Kupplung aus US 2013/0264085 A1 ist der Schaftteil zweiteilig aus einem Hohlzylinder und einem darin verschieblichen Kolben ausgebildet, wobei eine darin sich befindliche Feder bewirkt, dass sich der Kolben in den Hohlzylinder zurückzieht, wenn hydraulischer Druck abgelassen wird.

Die als Bajonettverschluss ausgebildete Kupplung aus US 2013/0264085 A1 weist aufgrund der Zweiteiligkeit des Schaftteils eine vergleichsweise komplizierte Bauweise auf.

Grundsätzlich ist es ein anhaltendes Bedürfnis, hinsichtlich des Kupplungsmechanismus bei Pressgeräten mit hohen Längskräften die Betriebssicherheit noch weiter zu verbessern.

### Darstellung der Erfindung

Die vorliegende Erfindung hat sich deshalb zur Aufgabe gestellt, eine Kupplung zur Verbindung eines Werkzeugwechselkopfes mit einem Maschinenteil eines Pressgeräts bereitzustellen, wobei die Kupplung möglichst einfach aufgebaut ist, einfach und schnell handhabbar ist, und die Betriebssicherheit auch bei sehr hohen Längskräften noch weiter verbessert wird.

Diese Aufgaben erfüllt eine Kupplung zur Verbindung eines Werkzeugwechselkopfes mit einem Maschinenteil eines Pressgeräts mit den Merkmalen des Patentanspruches 1.

Die Lösung besteht prinzipiell darin, dass das Maschinenteil, d.h. der maschinenseitige Teil, des Pressgeräts eine einzige in einem Aufnahmebereich sich befindliche Kompressionsfeder aufweist und die Kompressionsfeder derart angeordnet ist, so dass, durch Einführen des Schaftteils in den Aufnahmebereich, die Kompressionsfeder mit dem Schaftteil des Werkzeugwechselkopfs in Wirkverbindung gebracht werden kann, und in der Schliessstellung durch die Wirkung der Federkraft der Kompressionsfeder auf den Werkzeugwechselkopf ein jeweiliges Einrastelement des Werkzeugwechselkopfes auf eine Einrastzone eines jeweiligen Halteelements gepresst werden kann und dadurch als Sicherungsfeder zur Sicherung der Schliessstellung fungieren kann, während die Kompressionsfeder in der Offenstellung als Auswerferfeder fungieren kann.

Unter einer Wirkverbindung zwischen Kompressionsfeder und dem Schaftteil des Werkzeugwechselkopfes wird im Sinne der vorliegenden Erfindung verstanden, dass die Wirkung der Federkraft durch direkten Kontakt der Kompressionsfeder mit der Stirnfläche des Schaftteils des Werkzeugwechselkopfes ausgeübt werden kann, während die Wirkung der Federkraft auch durch ein zwischengeschaltetes Element auf die Stirnfläche des Schaftteils des Werkzeugwechselkopfes ausgeübt werden kann.

Im Sinne der vorliegenden Erfindung wird unter einer Offenstellung des Schaftteils des Werkzeugwechselkopfes anhand der erfindungsgemässen Kupplung verstanden, dass der Schaftteil des Werkzeugwechselkopfes im Aufnahmebereich des Maschinenteils axial verschieblich ist, d.h. dass das Schaftteil des Werkzeugwechselkopfes aus dem Aufnahmebereich des Maschinenteils ausgeworfen werden kann.

Unter einer Schliessstellung des Schaftteils des Werkzeugwechselkopfs anhand der erfindungsgemässen Kupplung wird im Weiteren verstanden, dass der Schaftteil des Werkzeugwechselkopfes in seiner axialen Verschieblichkeit im Aufnahmebereich des Maschinenteils blockiert ist.

Durch die Federanordnung in der Kupplung gemäss der vorliegenden Anmeldung wird somit vorteilhaft erreicht, dass durch eine einzige Kompressionsfeder die Schliessstellung verbessert und dadurch die Betriebssicherheit erhöht wird, während gleichzeitig eine einfache Bauweise erzielt wird.

Ein weiterer Vorteil der erfindungsgemässen Kupplung kann darin gesehen werden, dass der Werkzeugwechselkopf am Maschinenteil des Pressgeräts installiert werden kann ohne Zuhilfenahme zusätzlicher Hilfswerkzeuge.

Weitere vorteilhafte Ausgestaltungsformen sind in den abhängigen Patentansprüchen angegeben.

Im Sinne einer bevorzugten Weiterbildung der vorliegenden Erfindung umfasst die erfindungsgemässe Kupplung eine im Aufnahmebereich auf der den Halteelementen zugewandten Seite der Kompressionsfeder angeordnete Federscheibe, wobei die Kompressionsfeder und die Federscheibe im Aufnahmebereich des Maschinenteils derart angeordnet und dimensioniert ist, dass die Federscheibe zumindest abschnittsweise mit der Stirnfläche des im Aufnahmebereich eingeführten Schaftteils des Werkzeugwechselkopfes in Kontakt gebracht (d.h. dass eine gemeinsame Kontaktfläche ausbildbar ist) und dadurch indirekt in Wirkverbindung gebracht werden kann und die von der Kompressionsfeder ausgehende Federkraft auf die Stirnfläche des Schaftteils des Werkzeugwechselkopfs übertragen werden kann.

Im Weiteren umfassen vorzugsweise die mindestens zwei Halteelemente am Maschinenteil jeweils an den beiden Umfangenden sich befindliche und sich in Richtung der Längsachse des Maschinenteils zur Kompressionsfeder hin erstreckende Einrastkanten. Anhand solcher Einrastkanten muss nebst einer Drehung des Werkzeugwechselkopfes die Federkraft der Kompressionsfeder in axialer Richtung entsprechend der Längserstreckung der Einrastkanten überwunden werden, um von der Schliessstellung in die Offenstellung zu gelangen, und umgekehrt. Damit kann durch die Einrastkanten vorteilhaft die Schliessstellung zusätzlich abgesichert und die Betriebssicherheit erhöht werden.

Besonders bevorzugt umfasst die erfindungsgemässe Kupplung mindestens drei, noch bevorzugter vier, am Schaftteil des Werkzeugwechselkopfes angeordnete, d.h. am Schaftteil fixierte beziehungsweise angeformte, Einrastelemente, sowie gleich viele (d.h. mindestens drei, noch bevorzugter vier) zu den Einrastelementen korrespondierende, im Aufnahmebereich des Maschinenteils angeordnete, d.h. an den Innenwänden eines hohlzylindrischen Abschnitts des Maschinenteils fixierte beziehungsweise angeformte, Halteelemente.

Vorzugsweise ist die Kompressionsfeder als ringförmige, drehsymmetrische Feder mit einer wellenförmigen Struktur ausgestaltet. Alternativ ist jedoch auch denkbar, dass die Kompressionsfeder beispielsweise als ringförmige Tellerfeder oder als Spiralfeder ausgestaltet ist.

Ein weiterer Aspekt der vorliegenden Erfindung betrifft ein Pressgerät, umfassend zumindest: ein Maschinenteil, einen Werkzeugwechselkopf mit einem Schaftteil sowie die erfindungsgemässe Kupplung.

Ein weiterer Aspekt der vorliegenden Erfindung betrifft ein Verfahren zur Betätigung einer Kupplung zur Verbindung eines Werkzeugwechselkopfes mit einem Maschinenteil eines Pressgeräts, umfassend die Verfahrensschritte:
(1) Einführen des Schaftteils des Werkzeugwechselkopfes in den Aufnahmebereich des Maschinenteils in einer geeigneten Winkelposition in die Offenstellung, in welcher die Federscheibe zumindest abschnittsweise die Stirnfläche des Schaftteils des Werkzeugwechselkopfes kontaktiert;
(2) Andrücken des Schaftteils gegen die Federscheibe, so dass die Kompressionsfeder zumindest in einem Masse zusammengepresst wird, um das Schaftteil zum Maschinenteil hin in Richtung der Längsachse um eine einer Längserstreckung einer Einrastkante entsprechende Distanz zu bewegen;
(3) Drehen des Schaftteils in Pfeilrichtung P₂ um eine Drehachse D_{R} bei gleichzeitig angedrücktem Schaftteil in die Schliessstellung bis zu einer Winkelposition, in welcher die Einrastelemente mit den Halteelementen in Deckung sind zwischen den beiden Einrastkanten eines jeweiligen Halteelements, wobei durch die Federkraft der Kompressionsfeder ein jeweiliges Einrastelement auf die Einrastzone eines jeweiligen Halteelements gepresst wird und dadurch die Kompressionsfeder als Sicherungsfeder zur Sicherung der Schliessstellung fungieren kann.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben. Es zeigen:
- Fig. 1: eine perspektivische Ansicht einer bevorzugten Ausführungsform der erfindungsgemässen Kupplung eines Pressgeräts;
- Fig. 2: einen Längsschnitt B-B durch die in Fig. 1 gezeigte erfindungsgemässe Kupplung eines Pressgeräts, wobei der Werkzeugwechselkopf vom Maschinenteil des Pressgeräts getrennt ist;
- Fig. 3: einen Längsschnitt B-B durch die erfindungsgemässe Kupplung eines Pressgeräts, wobei die erfindungsgemässe Kupplung in einer Schliessstellung ist;
- Fig. 4: eine Detailansicht der in Fig. 3 im Längsschnitt B-B gezeigten Schliessstellung der erfindungsgemässen Kupplung;

### Beschreibung

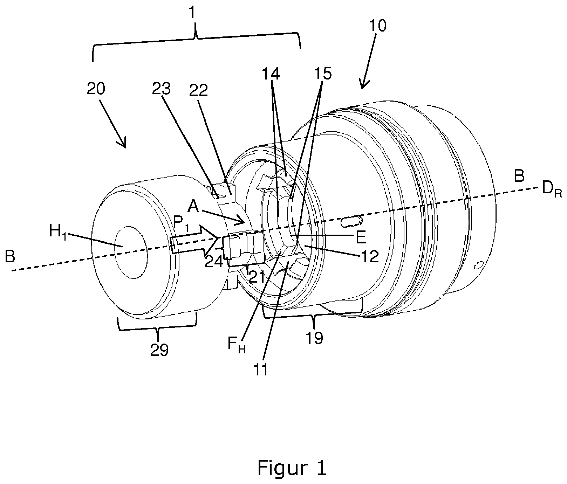

Fig.1 zeigt eine perspektivische Ansicht einer bevorzugten Ausführungsform der erfindungsgemässen Kupplung 1 zur Verbindung eines Werkzeugwechselkopfes 20 mit einem Maschinenteil 10 eines Pressgeräts. Der Einfachheit halber ist in dieser stark vereinfachten Ansicht das Werkzeug am Werkzeugwechselkopf 20 beziehungsweise die Energieversorgung etc. am Maschinenteil 10 ausgespart. Die Kupplung 1 erlaubt, dass der Werkzeugwechselkopf 20 mit dem Maschinenteil 10 des Pressgeräts lösbar verbindbar an- und abkuppelbar ist.

Das jeweilig anzubringende Werkzeug am Werkzeugwechselkopf 20 ist anhand des Maschinenteils 10 betreibbar, wobei das Maschinenteil 10 beispielsweise für den Betrieb mittels einer hydraulischen Flüssigkeit ausgelegt sein kann.

Der Maschinenteil 10 weist einen Aufnahmebereich A zur Aufnahme eines axial, d.h. in Richtung des Drehachse D_{R}, im Aufnahmebereich A verschieblichen Schaftteils 21 des Werkzeugwechselkopfes 20 auf. Bei eingeführtem Schaftteil 21 entsprechen die Längsachsen des Schaftteils 21 sowie des Maschinenteils 10 einer gemeinsamen Drehachse D_{R}. Hierbei bilden die Innenwände eines hohlzylindrischen Abschnitts 19 des Maschinenteils 10 den Aufnahmebereich A. Wie in Fig. 1 ersichtlich weist hier das Maschinenteil 10 im Aufnahmebereich A, d.h. an den Innenwänden des hohlzylindrischen Abschnitts, über den Umfang der Innenwände verteilt vier zu Einrastelementen 22 am Schaftteil 21 korrespondierende Halteelemente 14 und zwischen jeweils zwei benachbarten Halteelementen 14 ausgebildete Führungsnuten 11 auf. Bei dem in Fig. 1 gezeigten, bevorzugten Ausführungsbeispiel sind die Einrastelemente 22 sowie die korrespondierenden Halteelemente 14 symmetrisch beziehungsweise in gleichmässigen Winkelabständen angeordnet, so dass hier in vier möglichen Winkelstellungen das Schaftteil 21 des Werkzeugwechselkopfes 20 in den Aufnahmebereich A des Maschinenteils 10, in Richtung der Drehachse D_{R} betrachtet, in Pfeilrichtung P₁ einführbar ist.

Alternativ ist es denkbar, dass die Einrastelemente 22 sowie die korrespondierenden Halteelemente 14 unsymmetrisch angeordnet sind, wodurch beispielsweise in nur einer möglichen Winkelstellung das Schaftteil 21 des Werkzeugwechselkopfes 20 in den Aufnahmebereich A des Maschinenteils 10, in Richtung der Drehachse D_{R} betrachtet, in Pfeilrichtung P₁ einführbar ist beziehungsweise nur in einer möglichen Winkelstellung ausrichtbar ist.

Im Weiteren ist es gemäss einer bevorzugten Weiterbildung der erfindungsgemässen Kupplung 1 denkbar, dass durch verschiedene Umfänge der Mantelfläche des Werkzeugwechselkopfes 20 und der Innenwände des hohlzylindrischen Abschnitts des Maschinenteils 10 und / oder durch verschiedene Form und Anzahl der Einrastelemente 22 sowie der korrespondierenden Halteelemente 14 die erfindungsgemässe Kupplung derart geformt ist, dass vorteilhaft sichergestellt werden kann, dass nur die Kupplung eines vorgesehenen Werkzeugwechselkopfs 20 mit dem Maschinenteil 10 erfolgen kann.

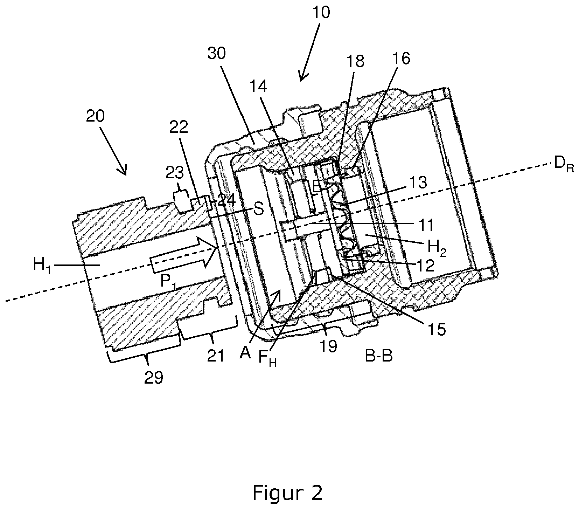

Beispielsweise kann dadurch sichergestellt werden, dass nur ein auf Längskräfte von 24 kN ausgelegter Werkzeugwechselkopf 20 auf einen auf Längskräfte von 24 kN ausgelegten Maschinenteil 10 gekoppelt werden kann, jedoch nicht ein auf 130 kN ausgelegter Werkzeugwechselkopf 20.
Im Weiteren umfasst das Maschinenteil 10 eine Federscheibe 12 sowie eine Kompressionsfeder (siehe Fig.2).

Die vier Halteelemente 14 umfassen jeweils an den beiden Umfangsenden sich befindliche und sich in Richtung der Drehachse D_{R} zur Kompressionsfeder 13 (siehe Fig.2) beziehungsweise zur Federscheibe 12 hin erstreckende Einrastkanten 15.

Der Werkzeugwechselkopf 20 umfasst das zylinderförmig ausgestaltete Schaftteil 21 sowie ein Übergangselement 29 zum Werkzeug, wobei das Schaftteil 21 sowie das Übergangselement 29 des Werkzeugwechselkopfs 20 hier einen zylindrischen, in Richtung der Drehachse D_{R} sich erstreckenden Hohlraum H₁ aufweist, welcher als Kanal K zur Übertragung der Kraft, z.B. mittels eines hier nicht gezeigten Kolbens, dient.

Das zylinderförmig ausgestaltete Schaftteil 21 des Werkzeugwechselkopfes 20 umfasst eine Stirnfläche S sowie vier auf der Mantelfläche ausgebildete und über den Umfang verteilte Einrastelemente 22. Wie in Fig. 1 gezeigt sind in dieser bevorzugten Ausführungsform vier an der Mantelfläche des Schaftteils 21 parallel zur Längsachse des Schaftteils 21 bis zur Stirnfläche S sich erstreckende Rippen 24 angeformt, wobei jeweils eine Nut 23 ausgespart ist und dabei die vier Einrastelemente 22 zwischen Nut 23 und der Stirnfläche S ausgebildet sind. Die Einrastelemente 22 sind hier endseitig am Schaftteil 21 angeordnet, d.h. die Einrastelemente 22 sind hier flächenbündig ausgerichtet mit der Stirnfläche S.

Die Führungsnuten 11 parallel zu einer Längsachse des Maschinenteils 10 zwischen zwei benachbarten Halteelementen 14 weisen in Umfangrichtung betrachtet mindestens dieselbe Ausdehnung auf wie die Einrastelemente 22 , so dass hier in vier möglichen Winkelstellungen das Schaftteil 21 des Werkzeugwechselkopfes 20 in den Aufnahmebereich A des Maschinenteils 10, in Richtung der Drehachse D_{R} betrachtet, in Pfeilrichtung P₁ einführbar ist. Um das Einführen des Schaftteils 21 des Werkzeugwechselkopfes 20 im Bereich der Führungsnuten 11 zu erleichtern, weisen die Halteelemente 14 jeweils an den beiden Umfangsenden gegenüberliegend von Einrastkanten 15, d.h. der Kompressionsfeder abgewandt, eine Fase F_{H} auf. Auf der der Kompressionsfeder 13 beziehungsweise der Federscheibe 12 zugewandten Seite der Halteelemente 14 zwischen den beiden Einrastkanten 15 eines jeweiligen Halteelements 14 ist eine Einrastzone E ausgebildet.

Es hat sich gezeigt, dass sich bei einer derartigen Anordnung mit mindestens drei, hier vier, Einrastelementen 22 und gleich vielen, hier vier, Halteelementen 14 die auftretenden Längskräfte zuverlässig übertragen lassen.

Von hier an und im Folgenden bezeichnen gleiche Referenzzeichen gleiche Komponenten in den Figuren.

Im Weiteren zeigt Fig. 2 einen Längsschnitt B-B durch die in Fig. 1 gezeigte Kupplung 1 eines Pressgeräts, wobei der Werkzeugwechselkopf 20 vom Maschinenteil 10 des Pressgeräts getrennt ist, d.h. vor der Einführung in Pfeilrichtung P₁ in den Aufnahmebereich A des Maschinenteils 10.

Durch den in Fig. 2 gezeigten Längsschnitt B-B sind weitere Details zur Federanordnung der erfindungsgemässen Kupplung 1 erkennbar. Wie in Fig. 2 gezeigt kann das Maschinenteil 10 im Bereich des hohlzylindrischen Abschnitts 19 von einer Schutzkappe 30 umgeben sein.

Das Maschinenteil 10 umfasst die Kompressionsfeder 13 sowie die auf der den Halteelementen 14 zugewandten Seite der Kompressionsfeder 13 angeordnete Federscheibe 12.

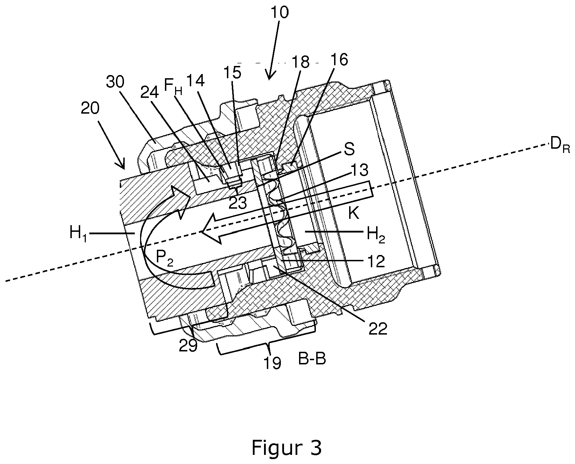

Die Kompressionsfeder 13 lagert hier zwischen einer Fläche der Federscheibe 12 und einer Anschlagfläche 18 des Maschinenteils 10 und kann auf die Federscheibe 12 einwirken. Damit ist die Kompressionsfeder 13 in axialer Richtung, d.h. parallel zur Richtung der Drehachse D_{R}, auslenkbar und die Kompressionsfeder 13 drückt im montierten Zustand die Federscheibe 12 von der Anschlagfläche 18 axial weg parallel zur Richtung der Drehachse D_{R}. Anhand eines Fixierrings 16 wird hier die Kompressionsfeder 13 in der Position gehalten und gleichzeitig dient sie als Gleithilfe für die Einrastelemente 22. Es hat sich vorteilhaft gezeigt, dass mit der Federscheibe 12 über dem Fixierring 16 die Einrastelemente 22 auch ohne zusätzliche Kraft in der in Fig.3 gezeigten Schliessstellung, d.h. der eingerasteten Position, gehalten werden.

Fig. 3 zeigt einen Längsschnitt B-B durch die erfindungsgemässe Kupplung 1 eines Pressgeräts, wobei die erfindungsgemässe Kupplung 1 in einer Schliessstellung ist.

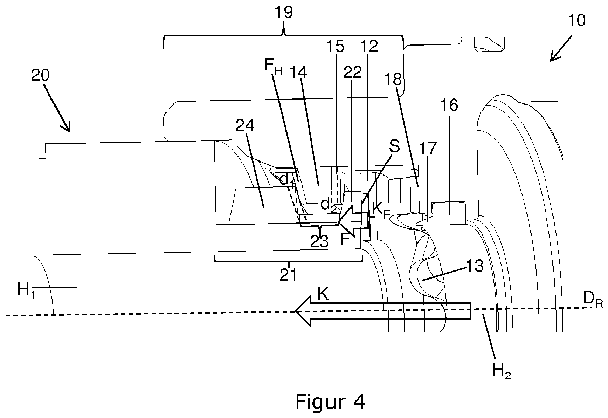

Wie in Fig.3 anhand eines Pfeiles angedeutet kann mittels Drehung des Werkzeugwechselkopfes 20 in Pfeilrichtung P₂ die Kupplung 1 von der Offenstellung in die Schliessstellung gebracht werden, bei gleichzeitigem Andrücken und Überwindung der Federkraft F der Kompressionsfeder 13 um mindestens eine der Längserstreckung der Einrastkante 15 in Richtung der Drehachse D_{R} entsprechende Distanz d₂ (siehe Fig.4).

In der in Fig.3 gezeigten Schliessstellung der Kupplung 1 sind die Halteelemente 14 in den Führungsnuten 23 aufgenommen, wobei die Einrastelemente 22 des Schaftteils 21 durch die Federkraft F der Kompressionsfeder 13 auf die Einrastzonen der Halteelemente 14 des Werkzeugwechselkopfes 20 gepresst werden.

Die Federscheibe 12 ist derart angeordnet, so dass die Federscheibe 12 in der Offenstellung beziehungsweise Schliessstellung (d.h. bei vollständig in den Aufnahmebereich A eingeführtem Schaftteil 21) zumindest abschnittsweise mit der Stirnfläche S des Schaftteils 21 des Werkzeugwechselkopfes 20 in Kontakt gebracht werden kann beziehungsweise eine Kontaktfläche K_{F} zwischen der Stirnfläche S des Schaftteils 21 und der Federscheibe 12 ausgebildet wird (siehe die Detailansicht in Fig. 4).

In der in Fig. 3 gezeigten Schliessstellung der Kupplung 1 wird die Ausbildung eines Kanals K für die Kraftübertragung erkennbar, welcher sich von einem Hohlraum H₂ des Maschinenteils 20 bis zum Hohlraum H₁ des Schaftteils 21 erstreckt. Dieser Kanal K hat nun in der Schliessstellung eine geeignete fixe Länge, um den gewünschten Weg beispielsweise für einen hier nicht gezeigten Kolben zu erhalten.

Fig.4 zeigt eine Detailansicht der in Fig. 3 im Längsschnitt B-B in Schliessstellung gezeigten, erfindungsgemässen Kupplung 1.

In dieser Detailansicht wird der Aufbau und die Anordnung der Kompressionsfeder 13 erkennbar als eine ringförmige, rotationssymmetrische Feder mit einer wellenförmigen Struktur, vorzugsweise eine aus Federstahl gefertigte Wellenfeder, wobei die Kompressionsfeder 13 in Richtung der Drehachse D_{R} betrachtet zwischen dem maschinenteilseitig angeordneten Fixierring 16 sowie der wechselkopfseitig angeordneten, ringförmig ausgebildeten Federscheibe 12 angeordnet ist. Alternativ ist es denkbar, dass hier anstelle einer Kompressions- bzw. Druckfeder eine Vielzahl von Kompressions- bzw. Druckfedern verwendet wird.

Der Fixierring 16 weist hier über den gesamten Innenumfang eine zur Kompressionsfeder 13 sich erstreckende Fixierkante 17 auf, wobei die Fixierkante 17 eine Fixierung der Kompressionsfeder 13 in der Position bewirkt.

Die Federscheibe 12 kontaktiert abschnittsweise die Stirnfläche S des Schaftteils 21 des Werkzeugwechselkopfes 20 im Bereich der Kontaktfläche K_{F} und überträgt die von der Kompressionsfeder 13 ausgehende Federkraft F auf die Stirnfläche S des Schaftteils 21 des Werkzeugwechselkopfs 20. Dadurch werden in der in Fig. 4 gezeigten Schliessstellung durch dieselbe Federkraft F die Einrastelemente 22 des Schaftteils 21 auf die Einrastzonen der Halteelemente 14 des Werkzeugwechselkopfes 20 gepresst und vorteilhaft die Schliessstellung gesichert.

Eine Differenz der Längserstreckung einer Nut 23 gegenüber der Längserstreckung eines Einrastelements 22 in Richtung der Drehachse D_{R} definiert eine Distanz d₁, während die Längserstreckung der Einrastkante 15 in Richtung der Drehachse D_{R} eine Distanz d₂ definiert. Dabei gilt allgemein: d₁ ≥ d₂.

Der Kupplungsvorgang anhand der erfindungsgemässen Kupplung 1 erfolgt in folgenden Schritten:
(1) Einführen des Schaftteils 21 des Werkzeugwechselkopfes 20 in den Aufnahmebereich A des Maschinenteils 10 in einer geeigneten Winkelposition in die Offenstellung, in welcher die Federscheibe 12 zumindest abschnittweise die Stirnfläche S des Schaftteils 21 des Werkzeugwechselkopfes kontaktiert;
(2) Andrücken des Schaftteils 21 gegen die Federscheibe, so dass die Kompressionsfeder zumindest in einem Masse zusammengepresst wird, um das Schaftteil 21 zum Maschinenteil 10 hin um die Distanz d₂ zu bewegen;
(3) Drehen des Schaftteils 21 in Pfeilrichtung P₂ bei gleichzeitig angedrücktem Schaftteil 21 in die Schliessstellung bis zu einer Winkelposition, in welcher die Einrastelemente 22 mit den Halteelementen 14 in Deckung sind zwischen den beiden Einrastkanten 15 eines jeweiligen Halteelements 14, wobei durch die Federkraft F der Kompressionsfeder 13 die Einrastelemente 22 auf die Einrastzonen E der jeweiligen Halteelemente 14 gepresst werden und dadurch die Schliessstellung gesichert wird.

### Bezugszeichenliste

- 1: Kupplung
- 5: Pressgerät
- 10: Maschinenteil
- 11: Führungsnut
- 12: Federscheibe
- 13: Kompressionsfeder
- 14: Halteelement
- 15: Einrastkante
- 16: Fixierring (zur Fixierung der Kompressionsfeder)
- 17: Fixierkante (des Fixierrings)
- 18: Anschlagfläche
- 19: Hohlzylindrischer Abschnitt (des Maschinenteils)
- 20: Werkzeugwechselkopf
- 21: Schaftteil
- 22: Einrastelement
- 23: Nut (in der Rippe des Schaftteils)
- 24: Rippe (am Schaftteil)
- 29: Übergangselement (zum Werkzeug des Werkzeugwechselkopfes)
- 30: Schutzkappe
- d₁: Distanz
- d₂: Distanz
- D_{R}: Drehachse
- E: Einrastzone
- F: Federkraft (der Kompressionsfeder)
- F_{H}: Fase (am Umfangsende Halteelemente)
- H₁: Hohlraum (im Schaftteil des Werkzeugwechselkopfes)
- H₂: Hohlraum (im Maschinenteil)
- K: Kanal
- P₁: Pfeilrichtung (Einführen Werkzeugwechselkopf)
- P₂: Pfeilrichtung (Drehung zwischen Offen- und Schliessstellung)
- S: Stirnfläche

## Patentansprüche

1. Kupplung (1) zur Verbindung eines Werkzeugwechselkopfes (20) mit einem Maschinenteil (10) eines Pressgeräts, insbesondere eines manuellen oder elektrisch angetriebenen, hydraulischen oder mechanischen Handpressgeräts,
wobei der Maschinenteil (10) einen Aufnahmebereich (A) zur Aufnahme eines axial im Aufnahmebereich (A) verschieblichen Schaftteils (21) eines Werkzeugwechselkopfes (20), insbesondere für Pressen, Scheiden und Stanzen wie Sanitärbereich oder Elektrobereich üblich, aufweist und der Schaftteil (21) eine Stirnfläche (S) und mindestens zwei Einrastelemente (22) umfasst,
wobei im Aufnahmebereich (A) mindestens zwei Halteelemente (14) angeordnet sind und zwischen jeweils zwei benachbarten Halteelementen (14) eine Führungsnut (11) ausgebildet ist, wobei in einer Offenstellung die mindestens zwei Einrastelemente (22) mit jeweils einer Führungsnut (11) in Deckung und in Richtung einer Drehachse (D_{R}) beweglich sind,
wobei in einer Schliessstellung die mindestens zwei Einrastelemente (22) mit den mindestens zwei Halteelementen (14) in jeweiligen Einrastzonen (E) der Halteelemente (14) zumindest abschnittsweise in Deckung sind,
wobei mittels Drehung des Werkzeugwechselkopfes (20) der Schaftteil (21) von der Offenstellung in die Schliessstellung bringbar ist, so dass zwischen dem Schaftteil (21) des Werkzeugwechselkopfes (20) und dem Maschinenteil (10) ein Bajonettverschluss ausgebildet ist,
**dadurch gekennzeichnet, dass**
das Maschinenteil (10) eine im Aufnahmebereich (A) sich befindliche Kompressionsfeder (13) aufweist und die Kompressionsfeder (13) derart angeordnet ist, so dass die Kompressionsfeder (13) mit der Stirnfläche (S) des Schaftteils (21) des Werkzeugwechselkopfs (20) in Wirkverbindung bringbar ist, und in der Schliessstellung durch die Wirkung der Federkraft (F) der Kompressionsfeder (13) auf den Werkzeugwechselkopf (20) ein jeweiliges Einrastelement (22) des Werkzeugwechselkopfes (20) auf die Einrastzone (E) eines jeweiligen Halteelements (14) anpressbar ist und dadurch als Sicherungsfeder zur Sicherung der Schliessstellung fungieren kann, während die Kompressionsfeder (13) in der Offenstellung als Auswerferfeder fungieren kann.

2. Kupplung (1) zur Verbindung eines Werkzeugwechselkopfes (20) mit einem Maschinenteil (10) eines Pressgeräts nach Patentanspruch 1,
**dadurch gekennzeichnet, dass**
die Kupplung (1) eine, im Aufnahmebereich (A) auf der den Halteelementen (14) zugewandten Seite der Kompressionsfeder (13) angeordnete Federscheibe (12) umfasst, wobei die Kompressionsfeder (13) und die Federscheibe (12) im Aufnahmebereich (A) des Maschinenteils (10) derart angeordnet und dimensioniert sind, dass die Federscheibe (12) zumindest abschnittsweise mit der Stirnfläche (S) des Schaftteils (21) des Werkzeugwechselkopfes (20) in Kontakt und dadurch in Wirkverbindung bringbar ist.

3. Kupplung (1) zur Verbindung eines Werkzeugwechselkopfes (20) mit einem Maschinenteil (10) eines Pressgeräts nach Patentanspruch 1 oder 2,
**dadurch gekennzeichnet, dass**
die mindestens zwei Halteelemente (14) jeweils an den beiden Umfangsenden sich befindliche und sich in Richtung der Drehachse (D_{R}) zur Kompressionsfeder hin (13) erstreckende Einrastkanten (15) umfassen.

4. Kupplung (1) zur Verbindung eines Werkzeugwechselkopfes (20) mit einem Maschinenteil (10) eines Pressgeräts nach einem der vorherigen Patentansprüche,
**dadurch gekennzeichnet, dass**
die Kompressionsfeder (13) als ringförmige, drehsymmetrische Feder mit einer wellenförmigen Struktur ausgestaltet ist.

5. Kupplung (1) zur Verbindung eines Werkzeugwechselkopfes (20) mit einem Maschinenteil (10) eines Pressgeräts nach einem der vorherigen Patentansprüche,
**dadurch gekennzeichnet, dass**
an der Mantelfläche des Schaftteils (21) mindestens zwei, parallel zur Richtung der Drehachse (D_{R}) bis zur Stirnfläche (S) sich erstreckende Rippen (24) angeformt sind, wobei in jeweils einer Rippe (24) eine Nut (23) ausgespart ist und dabei die mindestens zwei Einrastelemente (22) zwischen Nut (23) und der Stirnfläche (S) ausgebildet sind.

6. Kupplung (1) zur Verbindung eines Werkzeugwechselkopfes (20) mit einem Maschinenteil (10) eines Pressgeräts nach Patentanspruch 6,
**dadurch gekennzeichnet, dass**
die Differenz der Längserstreckung einer Nut (23) gegenüber der Längserstreckung eines Einrastelements (22) in Richtung der Drehachse (D_{R}) eine Distanz (d₁) definiert, während die Längserstreckung der Einrastkante (15) in Richtung der Drehachse (D_{R}) eine Distanz (d₂) definiert, und dass gilt: d₁ ≥ d₂.

7. Kupplung (1) zur Verbindung eines Werkzeugwechselkopfes (20) mit einem Maschinenteil (10) eines Pressgeräts nach einem der vorherigen Patentansprüche,
**dadurch gekennzeichnet, dass**
die Kupplung (1) mindestens drei, noch bevorzugter vier, am Schaftteil (21) des Werkzeugwechselkopfes (20) angeordnete Einrastelemente (22) sowie gleich viele, insbesondere mindestens drei, noch bevorzugter vier, zu den Einrastelementen (22) korrespondierende, im Aufnahmebereich des Maschinenteils (10) angeordnete Halteelemente (14) umfasst.

8. Pressgerät mit einer Kupplung (1) nach einem der vorherigen Patentansprüche, umfassend zumindest:
- ein Maschinenteil (10);
- einen Werkzeugwechselkopf (20) mit einem Schaftteil (21); sowie
- eine Kupplung (1) nach einem der vorherigen Patentansprüche.

9. Verfahren zur Betätigung einer Kupplung (1) zur Verbindung eines Werkzeugwechselkopfes (20) mit einem Maschinenteil (10) eines Pressgeräts nach einem der vorherigen Patentansprüche, umfassend die Verfahrensschritte:
(1) Einführen des Schaftteils (21) des Werkzeugwechselkopfes in den Aufnahmebereich (A) des Maschinenteils (10) in einer geeigneten Winkelposition in die Offenstellung, in welcher die Federscheibe (12) zumindest abschnittweise die Stirnfläche (S) des Schaftteils (21) des Werkzeugwechselkopfes (20) kontaktiert;
(2) Andrücken des Schaftteils (21) gegen die Federscheibe (12), so dass die Kompressionsfeder (13) zumindest in einem Masse zusammengepresst wird, um das Schaftteil (21) zum Maschinenteil (10) hin um eine in Richtung der Drehachse (D_{R}) einer Längserstreckung einer Einrastkante (15) entsprechende Distanz (d₂) zu bewegen;
(3) Drehen des Schaftteils (21) in Pfeilrichtung (P₂) um die Drehachse (D_{R}) bei gleichzeitig angedrücktem Schaftteil (21) in die Schliessstellung bis zu einer Winkelposition, in welcher die Einrastelemente (22) mit den Halteelementen (14) in Deckung sind zwischen den beiden Einrastkanten (15) eines jeweiligen Halteelements (14), wobei durch die Federkraft (F) der Kompressionsfeder (13) ein jeweiliges Einrastelement (22) auf die Einrastzone (E) eines jeweiligen Halteelements (14) gepresst wird und dadurch die Kompressionsfeder (13) als Sicherungsfeder zur Sicherung der Schliessstellung fungieren kann.

## Claims

1. A coupling (1) for connecting a swappable tool head (20) to a machine part (10) of a pressing device, particularly a manually or electrically driven hydraulic or mechanical hand pressing device,
wherein the machine part (10) has a receptacle region (A) for accommodating a shaft section (21) of a swappable tool head (20), particularly for pressing, cutting and punching operations of the type normally carried out in the fields of plumbing or electrical engineering, with said shaft section being axially displaceable in the receptacle region (A), and with the shaft section (21) comprising an end face (S) and at least two engaging elements (22),
wherein at least two holding elements (14) are arranged in the receptacle region (A) and a guide groove (11) is respectively formed between two adjacent holding elements (14),
wherein the at least two engaging elements (22) are in an open position respectively lined up with a guide groove (11) and movable in the direction of a rotational axis (D_{R}),
wherein the at least two engaging elements (22) are in a closed position at least sectionally lined up with the at least two holding elements (14) in respective engaging zones (E) of the holding elements (14), and
wherein the shaft section (21) can be transferred from the open position into the closed position by rotating the swappable tool head (20) such that a bayonet joint is formed between the shaft section (21) of the swappable tool head (20) and the machine part (10),
**characterized in that**
the machine part (10) has a compression spring (13), which is located in the receptacle region (A), and the compression spring (13) is arranged such that the compression spring (13) can be functionally connected to the end face (S) of the shaft section (21) of the swappable tool head (20), wherein a respective engaging element (22) of the swappable tool head (20) can in the closed position be pressed on the engaging zone (E) of a respective holding element (14) due to the effect of the spring force (F) of the compression spring (13) on the swappable tool head (20) such that the compression spring can act as a safety spring for securing the closed position whereas the compression spring (13) can act as an ejection spring in the open position.

2. The coupling (1) for connecting a swappable tool head (20) to a machine part (10) of a pressing device according to claim 1,
**characterized in that**
the coupling (1) comprises a spring washer (12), which is arranged in the receptacle region (A) on the side of the compression spring (13) that faces the holding elements (14), wherein the compression spring (13) and the spring washer (12) are arranged in the receptacle region (A) of the machine part (10) and dimensioned in such a way that the spring washer (12) can be at least sectionally brought in contact with and thereby functionally connected to the end face (S) of the shaft section (21) of the swappable tool head (20) .

3. The coupling (1) for connecting a swappable tool head (20) to a machine part (10) of a pressing device according to claim 1 or 2,
**characterized in that**
the at least two holding elements (14) respectively comprise engaging edges (15), which are located on the two circumferential ends and extend toward the compression spring (13) in the direction of the rotational axis (D_{R}) .

4. The coupling (1) for connecting a swappable tool head (20) to a machine part (10) of a pressing device according to one of the preceding claims,
**characterized in that**
the compression spring (13) is realized in the form of an annular, rotationally symmetrical spring with an undulating structure.

5. The coupling (1) for connecting a swappable tool head (20) to a machine part (10) of a pressing device according to one of the preceding claims,
**characterized in that**
at least two ribs (24) are integrally formed on the circumferential surface of the shaft section (21) such that they extend parallel to the direction of the rotational axis (D_{R}) and up to the end face (S), wherein a groove (23) is recessed in each rib (24) and the at least two engaging elements (22) are respectively formed between the groove (23) and the end face (S).

6. The coupling (1) for connecting a swappable tool head (20) to a machine part (10) of a pressing device according to claim 5,
**characterized in that**
the difference between the longitudinal extent of a groove (23) and the longitudinal extent of an engaging element (22) in the direction of the rotational axis (D_{R}) defines a distance (d₁) whereas the longitudinal extent of the engaging edge (15) in the direction of the rotational axis (D_{R}) defines a distance (d₂), and **in that** d₁ ≥ d₂.

7. The coupling (1) for connecting a swappable tool head (20) to a machine part (10) of a pressing device according to one of the preceding claims,
**characterized in that**
the coupling (1) comprises at least three engaging elements (22), preferably four engaging elements, which are arranged on the shaft section (21) of the swappable tool head (20), as well as the same number of holding elements (14), particularly at least three holding elements, preferably four holding elements, which correspond to the engaging elements (22) and are arranged in the receptacle region of the machine part (10).

8. A pressing device with a coupling (1) according to one of the preceding claims, comprising at least:
- a machine part (10);
- a swappable tool head (20) with a shaft section (21); and
- a coupling (1) according to one of the preceding claims.

9. A method for actuating a coupling (1) for connecting a swappable tool head (20) to a machine part (10) of a pressing device according to one of the preceding claims, comprising the following steps:
(1) inserting the shaft section (21) of the swappable tool head into the receptacle region (A) of the machine part (10) in a suitable angular position into the open position, in which the spring washer (12) at least sectionally contacts the end face (S) of the shaft section (21) of the swappable tool head (20);
(2) pressing the shaft section (21) against the spring washer (12) such that the compression spring (13) is compressed at least to a degree for moving the shaft section (21) toward the machine part (10) by a distance (d₂), which in the direction of the rotational axis (D_{R}) corresponds to a longitudinal extent of an engaging edge (15); and
(3) rotating the shaft section (21) into the closed position about the rotational axis (D_{R}) in the arrow direction (P₂) while the shaft section (21) is simultaneously pressed on until an angular position is reached, in which the engaging elements (22) with the holding elements (14) are lined up between the two engaging edges (15) of a respective holding element (14), wherein a respective engaging element (22) is pressed on the engaging zone (E) of a respective holding element (14) due to the spring force (F) of the compression spring (13) such that the compression spring (13) can act as a safety spring for securing the closed position.

## Revendications

1. Accouplement (1) destiné à relier une tête de changement d'outil (20) à une partie (10) d'un appareil de presse, en particulier un appareil de presse à main manuel ou à entraînement électrique, hydraulique ou mécanique,
sachant que la partie (10) comporte une zone de réception (A) pour loger une partie de queue (21) axialement déplaçable dans la zone de réception (A) d'une tête de changement d'outil (20), en particulier pour presser, séparer et emboutir,
comme cela est habituel dans le secteur sanitaire ou électrique, et la partie de queue (21) comprend une surface avant (S) et au moins deux éléments d'emboîtement (22),
sachant que dans la zone de réception (A) sont disposés au moins deux éléments de retenue (14) et qu'une rainure de guidage (11) est constituée entre respectivement deux éléments de retenue voisins (14),
sachant que dans une position d'ouverture, les au moins deux éléments d'emboîtement (22) peuvent être mobiles avec respectivement une rainure de guidage (11) en couverture et en direction d'un axe de rotation (D_{R}),
sachant que dans une position de fermeture, les au moins deux éléments d'emboîtement (22) sont au moins pour partie en couverture avec les au moins deux éléments de retenue (14) dans des zones d'emboîtement respectives (E) des éléments de retenue (14),
sachant que par rotation de la tête de changement d'outil (20), la partie de queue (21) peut être mise de la position d'ouverture dans la position de fermeture de telle sorte qu'entre la partie de queue (21) de la tête de changement d'outil (20) et la partie (10), une fermeture à baïonnette est constituée,
**caractérisé en ce que**
la partie (10) comporte un ressort de compression (13) se trouvant dans la zone de réception (A) et le ressort de compression (13) est disposé de telle manière que le ressort de compression (13) peut être mis en liaison fonctionnelle avec la surface avant (S) de la partie de queue (21) de la tête de changement d'outil (20) et dans la position de fermeture, un élément d'emboîtement respectif (22) de la tête de changement d'outil (20) peut être comprimé sur la zone d'emboîtement (E) d'un élément de retenue respectif (14) par l'action de la force élastique (F) du ressort de compression (13) sur la tête de changement d'outil (20) et peut de ce fait fonctionner comme un ressort de sécurité pour sécuriser la position de fermeture, alors que le ressort de compression (13) peut fonctionner comme ressort éjecteur dans la position d'ouverture.

2. Accouplement (1) destiné à relier une tête de changement d'outil (20) à une partie (10) d'un appareil de presse selon la revendication 1,
**caractérisé en ce que**
l'accouplement (1) comprend une rondelle élastique (12) disposée dans la zone de réception (A) sur la face du ressort de compression (13) tournée vers l'élément de retenue (14), sachant que le ressort de compression (13) et la rondelle élastique (12) sont disposés et dimensionnés dans la zone de réception (A) de la partie (10) de telle manière que la rondelle élastique (12) peut être mise en contact et de ce fait en liaison fonctionnelle au moins pour partie avec la surface avant (S) de la partie de queue (21) de la tête de changement d'outil (20).

3. Accouplement (1) destiné à relier une tête de changement d'outil (20) à une partie (10) d'un appareil de presse selon la revendication 1 ou 2,
**caractérisé en ce que**
les au moins deux éléments de retenue (14) comprennent respectivement des bords d'emboîtement (15) se trouvant aux deux extrémités périphériques et s'étendant en direction de l'axe de rotation (D_{R}) vers le ressort de compression (13).

4. Accouplement (1) destiné à relier une tête de changement d'outil (20) à une partie (10) d'un appareil de presse selon l'une quelconque des revendications précédentes,
**caractérisé en ce que**
le ressort de compression (13) est configuré comme un ressort de forme annulaire, symétrique en rotation avec une structure ondulée.

5. Accouplement (1) destiné à relier une tête de changement d'outil (20) à une partie (10) d'un appareil de presse selon l'une quelconque des revendications précédentes,
**caractérisé en ce qu'**
au moins deux nervures (24) s'étendant parallèlement en direction de l'axe de rotation (D_{R}) jusqu'à la surface avant (S) sont conformées sur la surface d'enveloppe de la partie de queue (21), sachant qu'une rainure (23) est aménagée dans respectivement une nervure (24) et que de ce fait les au moins deux éléments d'emboîtement (22) sont constitués entre la rainure (23) et la surface avant (S) .

6. Accouplement (1) destiné à relier une tête de changement d'outil (20) à une partie (10) d'un appareil de presse selon la revendication 5,
**caractérisé en ce que**
la différence entre l'extension longitudinale d'une rainure (23) et l'extension longitudinale d'un élément d'emboîtement (22) en direction de l'axe de rotation (D_{R}) définit une distance (d₁), alors que l'extension longitudinale du bord d'emboîtement (15) en direction de l'axe de rotation (D_{R}) définit une distance (d₂) et que cela donne : d₁ ≥ d₂.

7. Accouplement (1) destiné à relier une tête de changement d'outil (20) à une partie (10) d'un appareil de presse selon l'une quelconque des revendications précédentes,
**caractérisé en ce que**
l'accouplement (1) comprend au moins trois, de préférence quatre, éléments d'emboîtement (22) disposés sur la partie de queue (21) de la tête de changement d'outil (20) ainsi en même temps que de nombreux, en particulier au moins trois, de préférence quatre, éléments de retenue (14) correspondants aux éléments d'emboîtement (22), disposés dans la zone de réception de la partie (10) .

8. Appareil de presse avec un accouplement (1) selon l'une quelconque des revendications précédentes, comprenant au moins :
- une partie (10) ;
- une tête de changement d'outil (20) avec une partie de queue (21) ; ainsi qu'
- un accouplement (1) selon l'une quelconque des revendications précédentes.

9. Procédé d'actionnement d'un accouplement (1) destiné à relier une tête de changement d'outil (20) à une partie (10) d'un appareil de presse selon l'une quelconque des revendications précédentes, comprenant les étapes de procédé :
(1) introduction de la partie de queue (21) de la tête de changement d'outil dans la zone de réception (A) de la partie (10) dans une position angulaire appropriée dans la position d'ouverture dans laquelle la rondelle élastique (12) entre en contact au moins pour partie avec la surface avant (S) de la partie de queue (21) de la tête de changement d'outil (20) ;
(2) compression de la partie de queue (21) contre la rondelle élastique (12) de telle manière que le ressort de compression (13) soit au moins comprimé en une masse pour déplacer la partie de queue (21) vers la partie (10) d'une distance (d₂) correspondant à une extension longitudinale d'un bord d'emboîtement (15) en direction de l'axe de rotation (D_{R}) ;
(3) rotation de la partie de queue (21) dans le sens de la flèche (P₂) autour de l'axe de rotation (D_{R}) avec la partie de queue (21) simultanément comprimée dans la position de fermeture jusqu'à une position angulaire dans laquelle les éléments d'emboîtement (22) sont en couverture avec les éléments de retenue (14) entre les deux bords d'emboîtement (15) d'un élément de retenue respectif (14), sachant que sous l'effet de la force élastique (F) du ressort de compression (13), un élément d'emboîtement respectif (22) est pressé sur la zone d'emboîtement (E) d'un élément de retenue respectif (14) et le ressort de compression (13) peut de ce fait fonctionner comme un ressort de sécurité pour sécuriser la position de fermeture.
